# FASCICULE DE BREVET EUROPEEN

(11) **EP 3 414 058 B1**
(45) Date de publication et mention de la délivrance du brevet: **06.04.2022**
(21) Numéro de dépôt: 17709144.4
(22) Date de dépôt: 10.02.2017
(51) Int. Cl.: B25J 5/00, B25J 11/00

(54) **ROBOT MOBILE D'ASSISTANCE COMPRENANT AU MOINS UN SYSTEME D'APPUI**
MOBILER UNTERSTÜTZUNGSROBOTER MIT MINDESTENS EINEM TRÄGERSYSTEM
MOBILE ASSISTANCE ROBOT COMPRISING AT LEAST ONE SUPPORT SYSTEM

(30) Priorité: 12.02.2016 FR 1651139
(43) Date de publication de la demande: 19.12.2018
(73) Titulaire: Kompaï Robotics, 64210 Bidart (FR)
(72) Inventeur: DUPOURQUE, Vincent, 64600 Anglet (FR)
(74) Mandataire: Fantin, Laurent
(86) Numéro de dépôt international: PCT/FR2017/050313
(87) Numéro de publication internationale: WO 2017/137712

(56) Documents cités:
- EP-A1- 2 813 203
- EP-A1- 2 954 883
- WO-A1-2015/145756
- US-A1- 2015 224 640

## Description

La présente demande se rapporte à un robot mobile d'assistance comprenant au moins un système d'appui.

Le document WO-2008/149018 décrit un robot polyvalent plus particulièrement adapté pour l'assistance de personne à domicile. Ce robot se présente sous la forme d'une base qui comprend en partie inférieure des roues lui permettant d'être mobile et un ensemble de motorisations, de capteurs et de commandes permettant de contrôler les déplacements de la base. Le robot polyvalent décrit dans ce document WO-2008/149018 est ainsi pleinement performant pour se déplacer dans un environnement domestique.

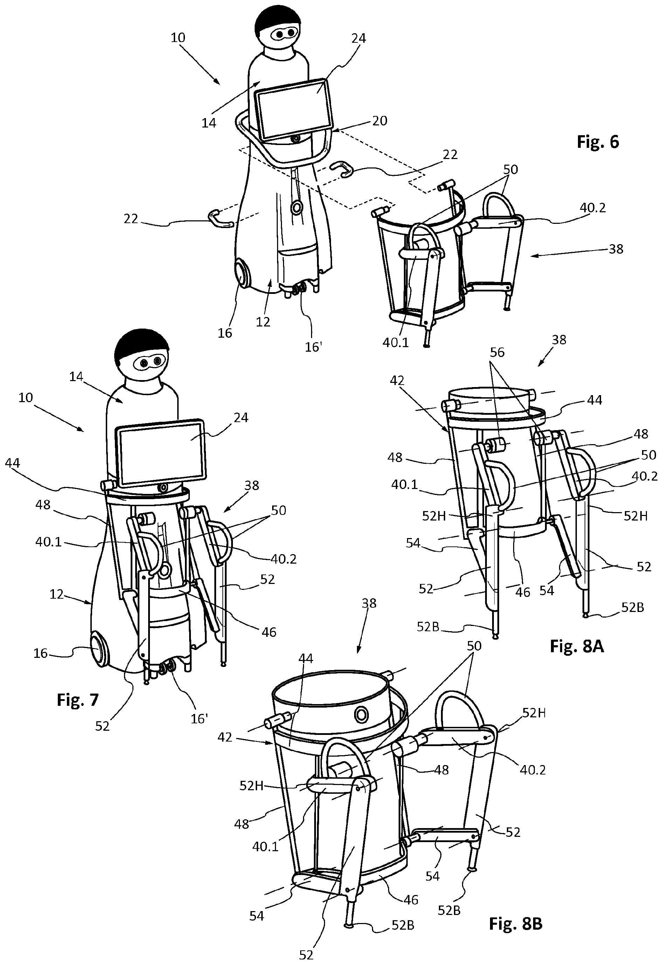

Selon un mode de réalisation décrit sur la figure 8, le robot est plus particulièrement adapté pour l'assistance d'une personne et il peut être équipé d'accessoires. Selon ce document, le robot polyvalent peut tracter un dispositif de déambulation qui comprend une base roulante attelée au robot polyvalent. Cet agencement n'est pas optimal car il induit un encombrement au sol important.

Les documents US 2015/224640 A1, WO 2015/145756 A1 et EP 2 954 883 A1 montrent chacun un robot mobile selon le préambule de la revendication 1.

La présente invention vise à faciliter le positionnement d'une personne par rapport au robot mobile.

A cet effet, l'invention a pour objet un robot mobile selon la revendication 1.

D'autres caractéristiques et avantages ressortiront de la description qui va suivre de l'invention, description donnée à titre d'exemple uniquement, en regard des dessins annexés sur lesquels :
- La figure 1 est une vue de face d'un robot mobile d'assistance qui illustre un mode de réalisation de l'invention,
- La figure 2 est une vue en perspective du robot visible sur la figure 1,
- La figure 3 est une vue latérale d'une main courante qui illustre un mode de réalisation de l'invention,
- La figure 4 est une vue de face de la partie inférieure d'un robot qui illustre un système de stabilisation selon une première variante de l'invention,
- La figure 5 est une vue de face de la partie inférieure d'un robot qui illustre un système de stabilisation selon une deuxième variante de l'invention,
- La figure 6 est une vue en perspective d'un robot qui illustre différents accessoires susceptibles d'être solidarisés au robot,
- La figure 7 est une vue en perspective d'un robot équipé d'un déambulateur qui illustre un mode de réalisation de l'invention,
- La figure 8A est une vue en perspective d'un déambulateur en position basse,
- La figure 8B est une vue en perspective d'un déambulateur en position haute,
- Les figures 9A à 9C sont des schémas qui illustrent le mode de fonctionnement d'un déambulateur.

Sur les différentes figures, on a représenté en 10 un robot mobile. Ce robot est plus particulièrement adapté pour l'assistance d'une personne.

Ce robot 10 comprend une base mobile 12 surmontée d'un tronc 14.

Selon un mode de réalisation, la base mobile 12 est identique à celle décrite dans le document WO-2008/149018. La base mobile 12 n'est pas plus décrite. De manière générale, cette base mobile 12 permet au robot 10 de se déplacer de manière autonome dans un environnement, comme par exemple l'intérieur d'une habitation ou d'une construction.

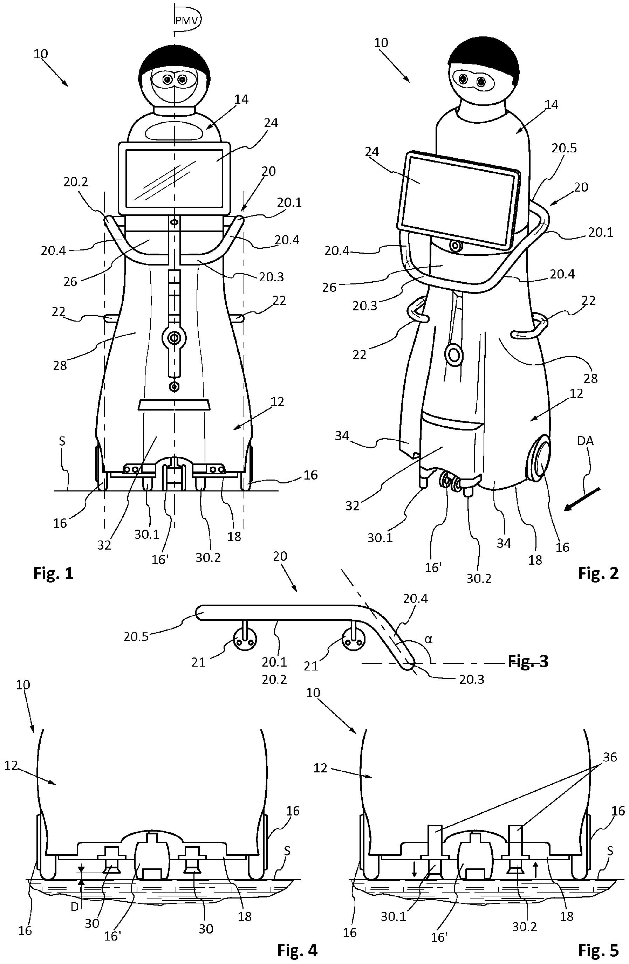

Le robot 10 se déplace selon une direction privilégiée appelée direction d'avance disposée dans un plan parallèle au sol S et selon un sens privilégié appelé sens d'avance. La direction d'avance et le sens d'avance sont représentés par la flèche DA sur la figure 2. En variante, le robot 10 peut ne pas avoir de sens privilégié et se déplacer indifféremment d'avant en arrière ou d'arrière en avant.

Quelle que soit la variante, la base mobile 12 comprend au moins trois roues 16. Les points de contact des roues 16 avec le sol S sont disposés aux sommets d'un polygone fermé appelé par la suite polygone de contact au sol. Selon un mode de réalisation visible notamment sur les figures 1, 2, 4 et 5, la base mobile 12 comprend quatre roues, deux roues latérales 16, motrices, avec des axes perpendiculaires à la direction d'avance DA et deux roues folles 16' configurées pour pivoter selon un axe vertical, positionnées à l'avant et à l'arrière selon le sens d'avance par rapport aux roues latérales 16.

Par la suite, un plan médian vertical PMV est un plan vertical situé à équidistance des roues latérales 16.

La base mobile 12 comprend une surface inférieure 18 parallèle au sol S et espacée du sol S d'une distance de l'ordre de 40 mm.

Selon une caractéristique de l'invention, le robot 10 comprend au moins un système d'appui préhensible et un système anti-basculement configuré pour éviter le basculement du robot 10 lorsqu'une personne prend appui sur le système d'appui préhensible et exerce un effort avec une composante orientée verticalement et vers le bas.

On entend par un système d'appui préhensible, un élément du robot qu'une personne peut saisir avec sa main et sur lequel la personne peut exercer un effort avec une composante orientée vers le sol.

Le système d'appui préhensible comprend au moins une main courante 20 positionnée à une hauteur supérieure à 600 mm par rapport au sol qui s'étend sur au moins une portion du pourtour du tronc 14 du robot 10.

Selon un mode de réalisation, la main courante 20 a une section circulaire avec un diamètre à titre indicatif de l'ordre de 30 mm.

La main courante 20 est reliée au tronc 14 par une liaison rigide. A titre d'exemple et de manière non limitative, la liaison rigide entre la main courante 20 et le tronc 14 comprend quatre points de fixation 21 sous forme chacun d'une platine fixée au tronc 14.

De préférence, la main courante 20 comprend deux portions latérales 20.1 et 20.2 et une portion transversale 20.3 positionnée entre les deux portions latérales 20.1 et 20.2. Les portions latérales 20.1 et 20.2 sont horizontales et sont parallèles à la direction d'avance DA. La portion transversale 20.3 est horizontale et perpendiculaire à la direction d'avance DA.

Avantageusement, la portion transversale 20.3 est décalée vers le bas par rapport aux portions latérales 20.1 et 20.2. Selon un mode de réalisation, le décalage en hauteur entre la portion transversale 20.3 et les portions latérales 201 et 20.2 est compris entre 70 à 250 mm.

Pour donner un ordre de grandeur, la portion transversale 20.3 est disposée à une hauteur comprise entre 650 et 720 mm et les portions latérales 20.1 et 20.2 sont disposées à une hauteur comprise entre 800 mm et 850 mm.

Selon un mode de réalisation, chaque portion latérale 20.1 ou 20.2 est reliée à la portion transversale 20.3 par une portion intermédiaire 20.4 inclinée et courbe. Ainsi, le changement de hauteur entre la portion transversale 20.3 et les portions latérales 20.1 et 20.2 est progressif. A titre indicatif, chaque portion intermédiaire 20.4 forme avec l'horizontale un angle α de l'ordre de 130°.

Cette configuration de la main courante 20 favorise le changement de posture assis/debout ou debout/assis. Ainsi, dans le cas du passage de la position assise à la position debout, la personne assise prend appui dans un premier temps sur la portion transversale 20.3 et progressivement décale ses appuis sur l'une des portions latérales 20.1 et 20.2 pour passer à la posture debout.

De préférence, la portion transversale 20.3 est positionnée à l'avant des portions latérales 20.1 et 20.2 et la main courante 20 comprend une portion arrière 20.5 disposée à l'arrière du tronc 14 et qui relie les deux portions latérales 20.1 et 20.2. Ainsi, la main courante 20 s'étend de manière continue tout autour du tronc 14 de sorte à le ceinturer ce qui tend à renforcer la rigidité de la main courante 20.

La main courante 20 est espacée du tronc 14 pour permettre à une personne de passer ses doigts entre la main courante 20 et le robot 10. L'espacement entre la main courante 20 et le robot 10 est compris entre 20 et 40 mm. La main courante 20 doit cependant ne pas être trop éloignée du tronc pour limiter les risques de basculement.

Pour assurer une meilleure stabilité, la main courante 20 est symétrique par rapport au plan médian vertical PMV.

La main courante 20 peut assurer la fonction d'assistance à la marche pour une personne à la manière d'une canne. A cet effet, le robot 10 comprend une commande configurée pour assurer un déplacement coordonné du robot 10 à côté de la personne. Selon un mode de réalisation, le robot 10 comprend un système de détection du mouvement de la personne qui se déplace à côté de lui. Pour contrôler l'avance, le système de détection comprend un capteur permettant de déterminer si la personne est positionnée dans une plage donnée par rapport à une position de référence selon la direction d'avance DA, le mouvement d'avance du robot étant commandé de sorte que la personne soit positionnée toujours dans la plage donnée. Pour contrôler la direction du robot, le système de détection comprend un capteur permettant de déterminer la distance entre la personne et le robot, la direction du robot étant ajustée de manière à ce que la distance entre la personne et le robot reste dans une plage donnée.

En variante ou en complément, la main courante 20 est instrumentée et comprend au moins un capteur permettant de déterminer la position de la main de la personne sur la main courante 20, l'avance et/ou la direction du robot étant ajustée en fonction de la position déterminée de la main de la personne sur la main courante 20.

Selon une autre variante, le système d'appui préhensible comprend au moins une poignée 22 en complément de la main courante 20. Selon une configuration préférentielle, le robot 10 comprend deux poignées 22, chacune d'elles étant disposée sous une portion latérale 20.1, 20.2 de la main courante 20. Ces poignées 22 peuvent être amovibles.

Pour donner un ordre de grandeur, chaque poignée 22 est disposée à environ 500 mm du sol. Selon un mode de réalisation, chaque poignée 22 a une forme en U avec une base horizontale, les extrémités des deux branches étant reliées au robot 10.

En cas de chute, chaque poignée 22 offre à une personne allongée un premier appui pour que cette dernière commence à se redresser. En suivant, la personne s'agrippe à la main courante 20 pour se redresser complétement.

Pour assurer une meilleure stabilité, les poignées 22 sont disposées de manière symétrique par rapport au plan médian vertical PMV.

Selon une autre caractéristique, le robot 10 comprend au moins une interface pour diffuser au moins un message indiquant à une personne comment utiliser le ou les système(s) d'appui préhensible(s) 20, 22. A cet effet, l'interface du robot 10 comprend au moins un écran 24 et/ou au moins un haut-parleur. En complément, pour faciliter la compréhension du message diffusé par l'interface, les poignées 22 et/ou les portions de la main courante 20 peuvent avoir des couleurs et/ou un repérage différents permettant de les différencier.

Selon une autre caractéristique, le système anti-basculement comprend au moins une réduction de section horizontale au niveau du tronc 14 par rapport à la base mobile 12 de sorte que la projection au sol du ou des système(s) d'appui préhensible(s) est située à l'intérieur du polygone de contact au sol.

De préférence, le tronc 14 comprend une section réduite 26 au niveau de laquelle est positionnée la main courante 20 de sorte que les projections au sol des portions latérales 20.1 et 20.2 de la main courante 20 sont situées à l'intérieur du polygone de contact au sol. Selon un mode de réalisation, la distance qui sépare une portion latérale 20.1 et 20.2 de la main courante 20 et le plan médian vertical PMV est inférieure à la distance qui sépare une roue latérale 16 et le plan médian vertical PMV.

Avantageusement, la section réduite 26 du tronc 14 est telle que la projection au sol de la portion avant 20.3 de la main courante 20 est disposée à l'arrière de la roue folle 16' située à l'avant (entre la roues folle 16' située à l'avant et les roues latérales 16).

De préférence, le tronc 14 comprend une section réduite 28 au niveau de laquelle sont positionnées les poignées 22 de sorte que les projections au sol des poignées 22 sont situées à l'intérieur du polygone de contact au sol.

Selon une autre caractéristique, le système anti-basculement comprend au moins un plot de stabilisation 30 relié au robot 10 et positionné sous la surface inférieure 18 du robot 10. Généralement, le système anti-basculement comprend plusieurs plots de stabilisation 30 qui sont positionnés sous la surface inférieure 18 du robot 10 de manière judicieuse pour limiter le basculement du robot.

Selon un premier agencement, lorsque la base mobile 12 comprend quatre roues dont les points de contact au sol S forment un quadrilatère, le robot 10 comprend quatre plots de stabilisation 30 positionnés aux quatre angles du quadrilatère.

Lorsque la base mobile 12 comprend trois roues dont les points de contact avec le sol S sont disposés selon un triangle isocèle, le robot 10 comprend trois plots de stabilisation, deux points de stabilisation 30.1 et 30.2 positionnés de part et d'autre de la roue folle 16' selon une direction perpendiculaire à la direction d'avance DA et un troisième plot de stabilisation (non visible) positionné dans le plan médian vertical PMV, à l'arrière des roues latérales 16. Avantageusement, la base mobile 12 comprend au moins une avancée 32, au niveau de laquelle sont positionnés la roue folle 16' et les plots de stabilisation 30.1 et 30.2. Cette avancée 32 a une largeur (selon une direction perpendiculaire à la direction d'avance DA) inférieure à celle de la base mobile 12. Ainsi, le robot 10 comprend deux dégagements 34 disposés de part et d'autre de l'avancée 32 pour limiter l'encombrement du robot au sol et améliorer l'accessibilité à la main courante 20.

En variante, la base mobile 12 comprend deux avancées 32, une à l'avant et une à l'arrière. Chaque avancée 32 comprend de part et d'autre des dégagements 34 pour permettre notamment à un utilisateur de placer ses pieds au plus près du robot en position debout ou assise.

Selon une première variante visible sur la figure 4, au moins un plot de stabilisation 30 dit passif est fixe. Selon une configuration, tous les plots de stabilisation 30 sont fixes. Dans le cas d'un plot de stabilisation passif, la distance D entre le plot de stabilisation passif 30 et le sol S est fixe. Selon un mode de réalisation, la distance D est de l'ordre de 2 cm.

Selon une deuxième variante visible sur la figure 5, au moins un plot de stabilisation 30.1 ou 30.2 dit actif est mobile entre une position rétractée (à droite sur la figure 5) dans laquelle il est distant du sol S et une position sortie (à gauche sur la figure 5) dans laquelle il est en contact avec le sol S. Selon une configuration, tous les plots de stabilisation sont actifs. Selon d'autres configurations, certains plots de stabilisation peuvent être passifs et d'autres actifs.

Selon un mode de réalisation, chaque plot de stabilisation 30 actif est relié à un actionneur 36, comme par exemple un vérin électrique.

En complément des plots de stabilisation actifs, le robot comprend une commande pour contrôler la position rétractée/sortie de chaque plot de stabilisation.

Selon un premier mode de réalisation, en complément de cette commande, le robot comprend au moins un capteur configuré pour déterminer la position de la personne par rapport au robot 10, la commande actionnant les plots de stabilisation actifs en fonction de la position déterminée de la personne par rapport au robot 10.

Selon un autre mode de réalisation, en complément de la commande, le robot comprend au moins un capteur, comme un capteur d'effort par exemple, configuré pour déterminer l'endroit où la personne exerce un effort sur la main courante 20, la commande actionnant les plots de stabilisation actifs en fonction de l'endroit déterminé au niveau duquel est exercé l'effort.

Selon une autre caractéristique, le système anti-basculement comprend une commande de stabilisation configurée pour contrôler les mouvements de la base mobile 12 en fonction d'au moins une caractéristique (intensité, position, orientation, direction...) de l'effort exercé par la personne sur le robot lorsqu'elle s'agrippe à un système d'appui préhensible 20, 22.

Ainsi, la commande de stabilisation commande des micros-déplacements en avant ou en arrière de sorte à conserver l'effort exercé par la personne sur le robot vertical, orienté à l'intérieur du polygone de contact au sol pour limiter les risques de basculement.

Selon une autre variante visible sur les figures 7, 8A et 8B, 9A à 9C, le système d'appui préhensible comprend un déambulateur 38 relié au robot 10.

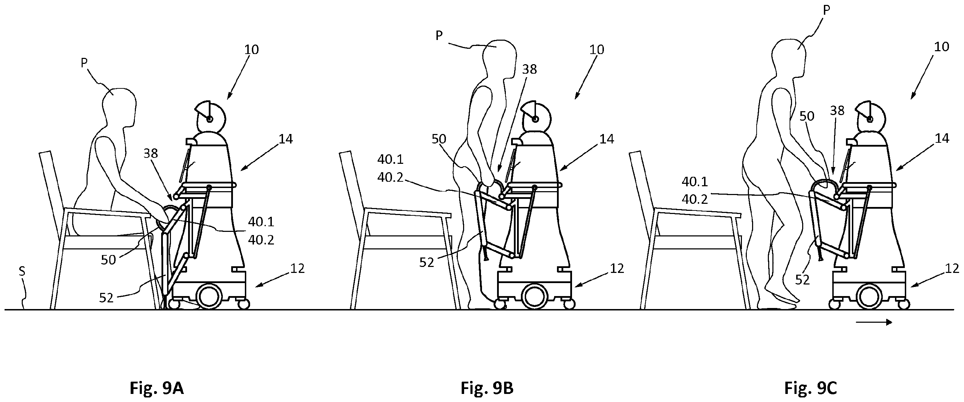

Avantageusement, le déambulateur 38 comprend deux bras 40.1 et 40.2 parallèles entre eux, mobiles entre une position basse visible sur les figures 7, 8A et 9A et une position haute visible sur les figures 8B, 9B et 9C. De préférence, les deux bras 40.1 et 40.2 sont simultanément positionnés soit en position haute, soit en position basse.

De préférence, le déambulateur 38 comprend un châssis 42 relié de manière démontable au tronc 14 du robot 10, auquel sont reliés les bras mobiles 40.1 et 40.2. Selon un mode de réalisation, le châssis 42 comprend une traverse haute 44 courbe, une traverse basse 46 courbe, des montants 48 qui relient les extrémités des traverses haute et basse 44 et 46.

La traverse haute 44 a une géométrie telle que l'extrémité supérieure de chaque montant 48 est reliée au robot 10 en deux points diamétralement opposés. Selon une configuration, l'extrémité supérieure de chaque montant 48 est reliée au robot par une articulation comprenant un axe de rotation horizontal perpendiculaire à la direction d'avance DA. Selon cette configuration, la traverse basse 46 est en contact avec le robot et limite le mouvement de rotation du châssis 42.

Pour améliorer l'ergonomie, chaque bras 40.1 et 40.2 comprend une poignée 50 qu'une personne P peut saisir.

Avantageusement, chaque bras mobile 40.1, 40.2 comprend une jambe d'appui 52 dont une extrémité haute 52H est reliée au bras 40.1, 40.2 et dont une extrémité basse 52B est configurée pour prendre appui au sol S lorsque les bras 40.1 et 40.2 sont en position basse comme illustré sur la figure 8A. Cette extrémité basse 52B est écartée du sol lorsque les bras 40.1 et 40.2 sont en position haute comme illustré sur la figure 8B. De préférence, chaque jambe d'appui 52 est reliée au châssis 42 par une biellette 54 parallèle au bras 40.1 ou 40.2. Pour chaque ensemble, le bras 40.1 ou 40.2, le châssis 42, la jambe d'appui 52 et la biellette 54 sont reliés entre eux par des articulations avec des axes de rotation horizontaux et sensiblement perpendiculaires à la direction d'avance DA de manière à former un parallélogramme déformable.

Selon un mode de réalisation préférentiel, le déambulateur 38 comprend au moins un actionneur pour provoquer de manière motorisée le changement de position des bras 40.1 et 40.2. Ce changement de position des bras 40.1 et 40.2 peut être automatique et/ou réalisé à la demande de l'utilisateur. A titre d'exemple, l'articulation de chaque bras 40.1 ou 40.2 avec le châssis 42 comprend une motorisation 56 pour contrôler le mouvement de pivotement de chaque bras 40.1, 40.2 selon un axe de rotation horizontal sensiblement perpendiculaire à la direction d'avance DA.

Comme illustré sur les figures 9A à 9C, le déambulateur 38 favorise le changement de position assis/debout d'une personne P et l'assure durant son déplacement. Lorsque la personne P est assise, le robot 10 vient se positionner en face d'elle. Les bras 40.1 et 40.2 sont positionnés en position basse comme illustré sur la figure 9A. En suivant, les bras 40.1 et 40.2 basculent en position haute de manière à assister la personne P pour se lever, comme illustré sur la figure 9B. Enfin, le robot 10 se déplace de manière coordonnée avec la personne P, comme illustré sur la figure 9C. Les mêmes éléments utilisés pour coordonner le robot avec la personne en appui sur la main courant 20 précédemment décrits peuvent être utilisés.

## Revendications

1. Robot mobile comprenant une base mobile (12) surmontée d'un tronc (14), ladite base mobile (12) comprenant au moins trois roues (16, 16') disposées aux sommets d'un polygone de contact au sol (S), ledit robot comprenant au moins un système d'appui préhensible et un système anti-basculement configuré pour éviter le basculement du robot (10) lorsqu'une personne prend appui sur le système d'appui préhensible , **caractérisé en ce que** le système d'appui préhensible comprend au moins une main courante (20) positionnée à une hauteur supérieure à 600 mm par rapport au sol qui s'étend sur au moins une portion du pourtour du tronc (14) du robot (10).

2. Robot mobile selon la revendication 1, **caractérisé en ce que** la main courante (20) comprend deux portions latérales (20.1, 20.2) et une portion transversale (20.3) positionnée entre les deux portions latérales (20.1, 20.2).

3. Robot mobile selon la revendication 2, **caractérisé en ce que** la portion transversale (20.3) est décalée vers le bas par rapport aux portions latérales (20.1, 20.2).

4. Robot mobile selon la revendication 3, **caractérisé en ce que** chaque portion latérale (20.1, 20.2) est reliée à la portion transversale (20.3) par une portion intermédiaire (20.4) inclinée et courbe.

5. Robot mobile selon l'une des revendications 1 à 4, **caractérisé en ce que** la main courante (20) s'étend tout autour du tronc (14).

6. Robot mobile selon l'une des revendications précédentes, **caractérisé en ce que** le système d'appui préhensible comprend au moins une poignée (22) disposée à environ 500 mm du sol.

7. Robot mobile selon l'une des revendications précédentes, **caractérisé en ce qu'**il comprend une commande configurée pour assurer un déplacement coordonné du robot par rapport à une personne marchant à côté du robot.

8. Robot mobile selon l'une des revendications précédentes, **caractérisé en ce que** le système de basculement comprend au moins une réduction de section horizontale au niveau du tronc (14) de sorte que la projection au sol du ou des système(s) d'appui préhensible(s) est située à l'intérieur du polygone de contact au sol.

9. Robot mobile selon l'une des revendications précédentes, **caractérisé en ce que** le système anti-basculement comprend plusieurs plots de stabilisation (30) positionnés sous le robot (10) de manière adéquate pour limiter le basculement du robot.

10. Robot mobile selon la revendication 9, **caractérisé en ce qu'**au moins un plot de stabilisation est fixe et distant du sol (S).

11. Robot mobile selon la revendication 9 ou 10, **caractérisé en ce qu'**au moins un plot de stabilisation (30.1, 30.2) est mobile entre une position rétractée dans laquelle il est distant du sol (S) et une position sortie dans laquelle il est en contact avec le sol (S).

12. Robot mobile selon l'une des revendications précédentes, **caractérisé en ce que** le système anti-basculement comprend une commande de stabilisation pour contrôler les mouvements de la base mobile (12) en fonction d'au moins une caractéristique de l'effort exercé par une personne sur le robot.

13. Robot mobile selon l'une des revendications précédentes, **caractérisé en ce que** le système d'appui préhensible comprend un déambulateur (38) relié au robot (10), qui comprend deux bras (40.1, 40.2) parallèles entre eux, mobiles entre une position basse et une position haute.

14. Robot mobile selon la revendication précédente, **caractérisé en ce que** chaque bras (40.1, 40.2) comprend une jambe d'appui (52) dont une extrémité haute (52H) est reliée au bras (40.1, 40.2) et dont une extrémité basse (52B) est configurée pour prendre appui au sol (S) lorsque les bras (40.1, 40.2) sont en position basse.

## Patentansprüche

1. Mobiler Roboter mit einer mobilen Basis (12), die von einem Rumpf (14) überragt wird, wobei die besagte bewegliche Basis (12) wenigstens drei Räder (16, 16') umfasst, die an den Scheitelpunkten eines Bodenkontaktpolygons (S) angeordnet sind, wobei der Roboter wenigstens ein greifbares Stützsystem und ein Anti-Kipp-System aufweist, das so eingerichtet ist, dass es das Kippen des Roboters (10) verhindert, wenn sich eine Person auf das greifbare Stützsystem stützt, **dadurch gekennzeichnet, dass** das greifbare Stützsystem wenigstens einen Handlauf umfasst, der in einer Höhe von mehr als 600 mm über dem Boden angeordnet ist und der sich über wenigstens einen Teil des Umfangs des Rumpfes (14) des Roboters (10) erstreckt.

2. Mobiler Roboter nach Anspruch 1, **dadurch gekennzeichnet, dass** der Handlauf (20) zwei Seitenabschnitte (20.1, 20.2) und einen Querabschnitt (20.3) umfasst, der zwischen den beiden Seitenabschnitten (20.1, 20.2) angeordnet ist.

3. Beweglicher Roboter nach Anspruch 2, **dadurch gekennzeichnet, dass** der Querabschnitt (20.3) in Bezug auf die Seitenabschnitte (20.1, 20.2) nach unten versetzt ist.

4. Beweglicher Roboter nach Anspruch 3, **dadurch gekennzeichnet, dass** jeder Seitenabschnitt (20.1, 20.2) mit dem Querabschnitt (20.3) durch einen geneigten und gekrümmten Zwischenabschnitt (20.4) verbunden ist.

5. Mobiler Roboter nach einem der Ansprüche 1 bis 4, **dadurch gekennzeichnet, dass** sich der Handlauf (20) um den Rumpf (14) herum erstreckt.

6. Mobiler Roboter nach einem der vorhergehenden Ansprüche, **dadurch gekennzeichnet, dass** das greifbare Stützsystem wenigstens einen Griff (22) umfasst, der etwa 500 mm vom Boden entfernt angeordnet ist.

7. Mobiler Roboter nach einem der vorhergehenden Ansprüche, **dadurch gekennzeichnet, dass** dieser eine Steuerung umfasst, die so eingerichtet ist, dass sie eine koordinierte Bewegung des Roboters in Bezug auf eine neben dem Roboter gehende Person gewährleistet.

8. Mobiler Roboter nach einem der vorhergehenden Ansprüche, **dadurch gekennzeichnet, dass** das Kipp-System wenigstens eine Verringerung des horizontalen Querschnitts im Bereich des Rumpfes (14) umfasst, so dass die Bodenprojektion des/der greifbaren Stützsystems/e innerhalb des Bodenkontaktpolygons liegt.

9. Mobiler Roboter nach einem der vorhergehenden Ansprüche, **dadurch gekennzeichnet, dass** das Anti-Kipp-System mehrere Stabilisierungsstützen (30) umfasst, die unter dem Roboter (10) in geeigneter Weise angeordnet sind, um das Kippen des Roboters zu begrenzen.

10. Mobiler Roboter nach Anspruch 9, **dadurch gekennzeichnet, dass** wenigstens eine Stabilisierungsstütze fest und vom Boden (S) entfernt ist.

11. Mobiler Roboter nach Anspruch 9 oder 10, **dadurch gekennzeichnet, dass** wenigstens eine Stabilisierungsstütze (30.1, 30.2) zwischen einer eingefahrenen Position, in der sie vom Boden (S) entfernt ist, und einer ausgefahrenen Position, in der sie den Boden (S) berührt, beweglich ist.

12. Mobiler Roboter nach einem der vorhergehenden Ansprüche, **dadurch gekennzeichnet, dass** das Anti-Kipp-System eine Stabilisierungssteuerung zur Steuerung der Bewegungen der mobilen Basis (12) in Abhängigkeit von wenigstens einem Merkmal der von einer Person auf den Roboter ausgeübten Kraft umfasst.

13. Mobiler Roboter nach einem der vorhergehenden Ansprüche, **dadurch gekennzeichnet, dass** das greifbare Stützsystem einen mit dem Roboter (10) verbundenen Rollator (38) umfasst, der zwei zueinander parallele Arme (40.1, 40.2) aufweist, die zwischen einer unteren Position und einer oberen Position beweglich sind.

14. Mobiler Roboter nach dem vorhergehenden Anspruch, **dadurch gekennzeichnet, dass** jeder Arm (40.1, 40.2) ein Stützbein (52) umfasst, dessen oberes Ende (52H) mit dem Arm (40.1, 40.2) verbunden ist und dessen unteres Ende (52B) so eingerichtet ist, dass es sich auf dem Boden (S) abstützt, wenn sich die Arme (40.1, 40.2) in der unteren Position befinden.

## Claims

1. Mobile robot comprising a mobile base (12) surmounted by a trunk (14), said mobile base (12) comprising at least three wheels (16, 16') arranged at the vertices of a polygon in contact with the ground (S), said robot comprising at least one grippable support system and an anti-topple system configured to prevent the robot (10) from toppling when a person leans on the grippable support system, **characterized in that** the grippable support system comprises at least one handrail (20) positioned at a height greater than 600 mm with respect to the ground which extends around at least a portion of the circumference of the trunk (14) of the robot (10).

2. Mobile robot according to Claim 1, **characterized in that** the handrail (20) comprises two lateral portions (20.1, 20.2) and a transverse portion (20.3) positioned between the two lateral portions (20.1, 20.2).

3. Mobile robot according to Claim 2, **characterized in that** the transverse portion (20.3) is offset downwards relative to the lateral portions (20.1, 20.2).

4. Mobile robot according to Claim 3, **characterized in that** each lateral portion (20.1, 20.2) is connected to the transverse portion (20.3) by an intermediate portion (20.4) which is inclined and curved.

5. Mobile robot according to one of Claims 1 to 4, **characterized in that** the handrail (20) extends all the way around the trunk (14).

6. Mobile robot according to one of the preceding claims, **characterized in that** the grippable support system comprises at least one handle (22) arranged at approximately 500 mm from the ground.

7. Mobile robot according to one of the preceding claims, **characterized in that** it comprises a control configured to ensure coordinated movement of the robot with respect to a person walking alongside the robot.

8. Mobile robot according to one of the preceding claims, **characterized in that** the topple system comprises at least one decrease in horizontal cross section at the level of the trunk (14) so that the projection on the ground of the one or more grippable support system(s) is located inside the polygon in contact with the ground.

9. Mobile robot according to one of the preceding claims, **characterized in that** the anti-topple system comprises a plurality of stabilization studs (30) positioned under the robot (10) in an appropriate manner so as to limit the wobbling of the robot.

10. Mobile robot according to Claim 9, **characterized in that** at least one stabilization stud is fixed and at a distance from the ground (S).

11. Mobile robot according to Claim 9 or 10, **characterized in that** at least one stabilization stud (30.1, 30.2) is movable between a retracted position in which it is at a distance from the ground (S) and an extended position in which it is in contact with the ground (S).

12. Mobile robot according to one of the preceding claims, **characterized in that** the anti-topple system comprises a stabilization control for controlling the movements of the mobile base (12) according to at least one characteristic of the force exerted by a person on the robot.

13. Mobile robot according to one of the preceding claims, **characterized in that** the grippable support system comprises a walking frame (38) connected to the robot (10), which comprises two arms (40.1, 40.2) that are parallel to one other, and are movable between a low position and a high position.

14. Mobile robot according to the preceding claim, **characterized in that** each arm (40.1, 40.2) comprises a support leg (52) of which an upper end (52H) is connected to the arm (40.1, 40.2) and of which a lower end (52B) is configured so as to rest on the ground (S) when the arms (40.1, 40.2) are in the low position.
